# EUROPEAN PATENT APPLICATION

(11) **EP 4 226 902 A1**
(43) Date of publication of application: **16.08.2023**
(21) Application number: 23150347.5
(22) Date of filing: 04.01.2023
(51) Int. Cl.: A61G 3/06, B60R 9/042, B66C 23/36

(54) **HOIST FOR A MOBILITY DEVICE**

(30) Priority: 10.02.2022 GB 202201732
(71) Applicant: BraunAbility Europe AB, 443 61 Stenkullen (SE)
(72) Inventor: NYSTRÖM, Mattias, Hyssna (SE); SLUNGARE, Hans Bertil, Gråbo (SE)
(74) Representative: Mewburn Ellis LLP

(57) **Abstract**

A hoist (100) for lifting a mobility device (e.g. wheelchair or mobility scooter). The hoist (100) has a lateral beam (104) configured to attach to a lifting apparatus. A strap (114) extends along the lateral beam and is movably coupled to the lateral beam (104). The strap (114) has first and second strap portions (112A-B) configured to protrude from first and second ends of the lateral beam, respectively. Each strap portion (112A-B) is coupled to a respective attachment element for attaching to the mobility device. At least one of the attachment elements (132) is moveable relative to the strap to enable selective adjustment of a position of the attachment element along the strap (114).

## Description

### Field of the Invention

The present invention relates to a hoist for lifting a mobility device (e.g. wheelchair or mobility scooter) into a vehicle.

### Background

Typically there is a large step up from the ground outside a vehicle to the floor of the vehicle supported by the chassis. It is known to use a hoist for lifting an unoccupied mobility device (e.g. wheelchair or mobility scooter) into a vehicle, e.g. to stow the unoccupied mobility device in a rear of the vehicle.

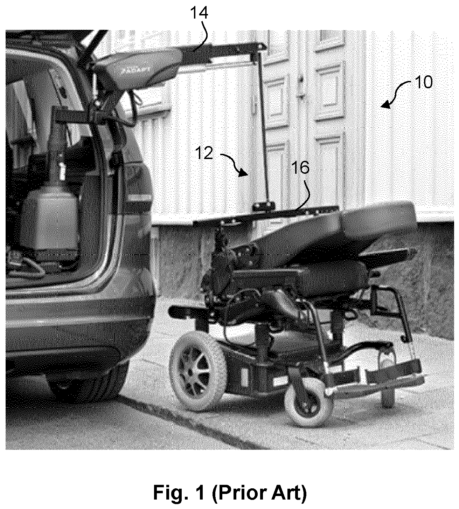

Fig. 1 shows a perspective view of a prior art system 10 for lifting a mobility device (also referred to as an access device) into a vehicle. The system 10 includes a hoist 12 for attaching to the mobility device, and a powered lift 14 which is mountable within the vehicle and attached to the hoist 12.

The hoist 12 includes a lateral beam 16 positionable above the mobility device. At opposite ends of the lateral beam 16, the hoist 12 further includes a first strap coupled to a first end of the lateral beam 16, and a separate second strap coupled to a second end of the lateral beam 16. The free ends of the first and second straps are connectable to either side of the mobility device to attach the hoist 12 to the mobility device.

The lateral beam 16 is attached at its centre to the powered lift 14. The lift 14 is typically mounted within a rear of the vehicle. The lift 14 is operable to move the hoist 12 relative to the vehicle to bring the access device into or out of the vehicle.

In use, the unoccupied access device is placed outside the vehicle. The hoist 12 is positioned above the access device and is attached to both sides of the access device. The lift 14 is then operated to carry the hoist 12 and the access device into the vehicle. An example of a system which operates in this manner is the Carolift ^{®} 6900 manufactured by BraunAbility ^{®}.

The present invention has been devised in light of the above considerations.

### Summary of the Invention

A first aspect of the invention provides a hoist for lifting a mobility device, the hoist comprising: a lateral beam for extending over the mobility device, the lateral beam being configured to attach to a lifting apparatus for carrying the hoist; a strap extending along the lateral beam and movably coupled to the lateral beam, the strap having first and second strap portions configured to protrude from first and second ends of the lateral beam respectively; and first and second attachment elements respectively coupled to the first and second strap portions and configured to attach to the mobility device; wherein the first attachment element is moveable relative to the strap to enable selective adjustment of a position of the first attachment element along the strap.

This arrangement advantageously helps facilitate adjustment of the hoist onto the mobility device, enabling the hoist to be customised to fit a variety of mobility devices from a variety of different positions. For example, three advantages are discussed in further detail below.

Firstly, this arrangement permits adjustment of the hoist to be carried out from only a single side (e.g. the first side) of the mobility device. In particular, since the strap extends along the lateral beam, is movably coupled to the lateral beam, and protrudes from each side of the lateral beam, the strap effectively forms a unitary (continuous) structure across the device which ensures that adjustment (e.g. tightening or loosening) of the first strap portion (via the first attachment element) may in turn also adjust the second strap portion on the other side of the lateral beam. Given that a user of the mobility device is likely to have impaired mobility, this allows them to easily fit the hoist to the mobility device (e.g. using the rear of the vehicle for support), without having to "go around" to the other side of the mobility device during the fitting and adjusting phase. Further, since the strap is movably coupled to the lateral beam, the lateral beam may remain in a central position during adjustment, ensuring an even weight distribution and symmetrical support across the mobility device.

Secondly, this arrangement may allow for a greater range of relative positions of the mobility device with respect to the lifting apparatus and/or the vehicle during attachment. For example, for a hoist having straps with fixed non-adjustable lengths, there is a limited range of relative positions at which the mobility device can be placed in order to get the attachment elements (e.g. clips) to engage correctly to allow a safe lift of the mobility device. In contrast, the adjustable hoist of the present disclosure may ensure that relative position is less critical, since the first and second strap portions can be adjusted (e.g. lengthened) to fit to a mobility device located at a broader range of positions outside the vehicle. The unitary structure of the strap even further improves this advantage, since additional length may effectively be added to the strap where needed (e.g. at a strap portion which is further from the vehicle) by pulling the strap across the lateral beam and thereby utilising excess length which is not needed at another end of the strap (e.g. at a strap portion which is closer to the vehicle). After the attachment elements are then attached to the mobility device, the lifting apparatus may then be used to move the mobility device to a more appropriate location for final adjustment (tightening) prior to lifting into the vehicle, thereby reducing the effort required by the user to bring the mobility device to a specific position.

Thirdly, the adjustability of the hoist may also allow the lifting beam to conveniently be brought close to the mobility device, to thereby help reduce the total height of the hoist and mobility device. This may in turn increase the clearance e.g. relative to a vehicle door, thereby facilitating lifting of the mobility device into a vehicle. Optionally, the hoist may allow the lifting beam to be brought snug against the mobility device, to compress the mobility device (e.g. by compressing the backrest against the squab of the mobility device's seat) and thereby even further reduce the total height. This may allow a larger mobility device to be "squeezed" to fit into a vehicle.

The lateral beam may extend over at least a portion of a lateral dimension of the mobility device, to allow the strap to be connected to opposing first and second sides of the mobility device. The lateral beam may have any suitable shape, e.g. linear and/or curved. The lateral beam may optionally be referred to as a "*beam"*, "*lateral member",* or "*support member", "lifting bar*", or "*lifting arm".*

The lateral beam is configured to attach (e.g. directly or indirectly) to a lifting apparatus for carrying the hoist. As used herein, "direct" attachment may refer to attachment in which two elements attach to each other without any intervening elements therebetween, whereas "indirect" attachment may refer to attachment in which the two elements attach together via one or more intermediary elements (whilst being capable of exerting a force on each other via the intermediary elements).

The lifting apparatus may be any suitable apparatus for carrying and moving the hoist and mobility device, e.g. into or out of a vehicle. The lifting apparatus may be automatically controllable and/or manually controllable. An automatically controllable lifting apparatus may also be referred to herein as an 'automated lift'.

The strap may also be referred to as a "*unitary strap"*, since it provides a unitary connection across the first and second sides of the hoist. The strap may be formed of one continuous piece of material providing integral strap portions, e.g. as a single piece of webbing. Alternatively, the strap may be formed of multiple pieces of material joined together (e.g. by stitching or adhesive) to effectively form a unitary structure.

The strap may be considered to include a third strap portion which extends along the lateral beam and which connects the first and second strap portions that protrude (e.g. hang) from the first and second ends of the lateral beam. The third strap portion may attach the first and second strap portions together either directly and/or indirectly.

The first and second strap portions may also be referred to as "*protruding portions"* or "*end portions".* The third strap portion may also be referred to as a "*central portion"* or "*lateral portion".* The length of each portion may vary by adjusting the hoist, e.g. by adjustment of the strap at the first attachment element. An end of the first or second strap portion which is adjacent the lateral beam may be referred to as a proximal end, whereas an opposing end of the first and second strap portion which is free or spaced from the lateral beam may be referred to as a distal end. In an embodiment, one end of the third strap portion may directly attach to the proximal end of the first strap portion, and the other end of the third strap portion may directly attach to the proximal end of the second strap portion.

The first (protruding) strap portion (attached to the first attachment element) may be considered to include two sub-portions or zones: a first ("working") zone and a second ("excess") zone. The first (working) zone extends between the first attachment element and the lateral beam (or proximal end), and therefore functions to help carry the load of the mobility device. The second (excess) zone is located on an opposite side of the attachment element from the lateral beam (e.g. between the first attachment element and the distal end), and therefore provides excess (e.g. hanging) material which is not usable for carrying the load in use but which may optionally be moved (via adjustment of the first attachment element) to shorten or lengthen a working length of the strap. As used herein, a "*working length"* of the strap may refer to a length of strap between the first and second attachment elements, i.e. a length that is usable to help carry the load of the mobility device in use. Since the first attachment element is movable relative to the strap, it enables selective adjustment of the working length.

The second (protruding) strap portion (attached to the second attachment) at least includes a 'working' zone. In some embodiments, the second attachment element may be movable relative to the strap and may therefore include a working and excess zone as discussed above in relation to the first strap portion. Alternatively, in other embodiments, the second attachment element may be non-movable relative to the strap, and the second strap portion may therefore terminate at the second attachment element, without including any excess material forming an excess zone at the second strap portion. In an embodiment, the working length may consist of: a section of the first strap portion between the first attachment element and the proximal end of the first strap portion; the third strap portion; and, a section of the second strap portion between the proximal end of the second strap portion and the second attachment element.

The first attachment element may be slidable relative to (e.g. along) the strap. For example, the first attachment element may include an aperture sized to accommodate the strap, so that the strap can slide through the aperture. Alternatively, the first attachment element may be movable relative to the strap in other suitable manners, e.g. by having a detachable fastener (e.g. clip, carabiner) for detachably connecting to a plurality of connection points (e.g. apertures) located along the strap.

Adjustment of the position of the first attachment element along the strap may in turn be considered to adjust the position of the first (and/or second) attachment element relative to the lateral beam, which may retain a relatively central position between the first and second attachment elements in use. Accordingly, adjustment of the first attachment element relative to the strap and lateral beam may in turn adjust a position of the second attachment element relative to the lateral beam.

The first and second attachment elements may have the same or different configurations from each other. For example, the second attachment element may have any of the features discussed herein in relation to the first attachment element. Alternatively, the second attachment element may have a different configuration, e.g. may provide a fixed connection to the strap.

Optionally, the strap may extend through the lateral beam. Further, the strap may be slidable relative to the lateral beam. For example, the lateral beam may be hollow, and the strap may extend through and be slidable within the hollow lateral beam. Alternatively or additionally, the lateral beam may include one or more guiding elements (e.g. a plurality of hoops or prongs along an external surface of the lateral beam) for retaining the strap to extend along the lateral beam.

Optionally, the hoist further comprises a strap-locking element for selectively fixing the strap to the lateral beam. Advantageously, the strap-locking element may help to secure the strap in position, thereby limiting movement of the hoist during use and ensuring stability whilst lifting the mobility device. Further, the strap-locking element may improve ease-of-use, by ensuring that after the hoist is disconnected from the mobility device, the strap may still retain an appropriate length to be fixed to the same mobility device when needed in future.

The strap-locking element may be locatable at any suitable position along the lateral beam. For example, the strap-locking element may be locatable at or near the first end, second end, and/or centre of the lateral beam. In an embodiment, the lateral beam includes two strap-locking elements, with one at or near each end of the lateral beam.

The strap-locking element may have any suitable configuration. For example, the strap-locking element may comprise a screw or other protrudable element configured to selectively bear against the strap, or to protrude into apertures formed within the strap. The protrudable element may be selectively actuatable between an unlocked (e.g. unscrewed) configuration and a locked (e.g. screwed) configuration, to selectively fix the strap in place.

Optionally, the strap-locking element may include a clamping element having a planar surface for selectively bearing against the strap. The planar surface may help to distribute pressure along the strap (which may also have a planar shape) and thereby help mitigate damage to the strap, e.g. compared to arrangements in which a protrudable element may directly contact the strap.

The planar surface may be located between the protrudable element and the strap. The protrudable element may be actuated against the planar surface to clamp the strap in place.

The clamping element may include a single planar surface, e.g. to clamp the strap between the planar surface and the lateral beam. Alternatively, the clamping element may comprise two or more planar surfaces on opposing sides of the strap. For example, the clamping element may comprise a hollow rectangular body located within the lateral beam, the strap extending through the clamping element.

Optionally, the clamping element may include an enlarged end to bear against the end of the lateral beam to prevent the clamping element from disappearing (withdrawing) into the lateral beam. The enlarged end may also have a smooth external surface for protecting the strap from a distal end of the lateral beam (which may be relatively sharp).

Optionally, the clamping element may comprise a high-friction material (e.g. rubber) to improve a gripping force against the strap.

Optionally, the lateral beam may have an adjustable length. The "*length"* of the lateral beam may refer to a distance measured from the first end to the second end of the lateral beam. Advantageously, by providing an adjustable length, the lateral beam to be adjusted and customised to fit across a variety of different mobility devices.

In variant embodiments, the lateral beam may have a non-adjustable length.

Optionally, the lateral beam may comprise two or more telescoping members, the telescoping members being slidable relative to each other to adjust the length of the lateral beam. This provides a convenient and simple arrangement for adjusting the length of the lateral beam. The telescoping members may be referred to herein as 'inner' and 'outer' telescoping members or as 'first', 'second', and/or 'third' telescoping members.

Optionally, one or more of the telescoping members (e.g. an inner telescoping member) may be hollow to provide a passageway through which the strap may extend.

In variant embodiments, the lateral beam may have other adjustable configurations. For example, the lateral beam may alternatively include a plurality of discrete members which can be attached/detached to each other (e.g. at their ends) to adjust the length of the lateral beam.

In some embodiments, the lateral beam may include three or more adjustable (e.g. telescoping) members. For example, the lateral beam may include a central member (e.g. central telescoping member) which is located at the centre of the lateral beam (laterally between the first and second strap portions) and which is configured to attach to the lifting apparatus. Further, the lateral beam may include two peripheral adjustable members (e.g. telescoping members) which are located at the peripheral regions of the lateral beam (near to the first and second strap portions) and which are movable relative to the central member. This arrangement may allow the peripheral adjustable members to be adjusted relative to the central member to provide a desired overall length, whilst also allowing the central member to retain a connection to the lifting apparatus at a central position along the beam (e.g. at a midpoint of the beam), thereby helping to maintain a stable weight distribution across the length of the beam.

Optionally, the lateral beam includes a beam-locking element for selectively fixing the length of the lateral beam. The beam-locking element may advantageously help to further improve stability of the hoist, and to reduce the need for subsequent adjustments when using the hoist with the same mobility device in future.

The beam-locking element may include analogous features to those discussed above in relation to the strap-locking element. For example, the beam-locking element may include a screw configured to selectively fix a first member of the lateral beam (e.g. a central telescoping member) to a second member of the lateral beam (e.g. a peripheral telescoping member), e.g. by extending through an aperture formed in each member of the lateral beam.

Optionally, the first attachment element comprises a resiliently biased mechanism for selectively clamping the strap to prevent the first attachment element from sliding along the strap in a direction towards a distal end of the first strap portion.

In this manner, the resiliently biased mechanism may effectively prevent loosening of the strap, without requiring effort by the user to lock the strap against the attachment element. This arrangement may also be thought of as the resiliently biased mechanism preventing an increase in a working length of the strap, where the working length corresponds to a length of strap between the first and second attachment elements.

Movement of the attachment element towards a distal end of the first strap portion may also be referred to herein as movement in a "*distal"*, *"outward"*, or "loosened" direction. Conversely, a "*proximal,"* "*inward"*, or *"tightened" direction* may refer to a direction of movement of the attachment element toward the proximal end of the first strap portion.

Optionally, the resiliently biased mechanism may comprise a spring-loaded mechanism or cam mechanism for resiliently clamping on the strap to prevent movement of the strap in the first direction but not the second direction.

Optionally, the resiliently biased mechanism comprises a clamping surface operatively coupled to a spring loading mechanism, wherein the spring loading mechanism is configured in use to urge the clamping surface against the strap when the first attachment element is pulled along the strap in the direction towards the distal end of the first strap portion to prevent the first attachment element from sliding along the strap in the direction towards the distal end of the first strap portion.

Optionally, the spring loading mechanism is configured in use to permit release of the clamping surface from the strap when the first attachment element is pulled along the strap in a direction away from the distal end of the first strap portion to permit the first attachment element to slide along the strap in the direction away from the distal end of the first strap portion.

Accordingly, the resiliently biased mechanism may prevent movement of the first attachment element in the distal direction whilst permitting movement in the proximal direction. Advantageously, this may facilitate easy tightening of the strap whilst preventing loosening of the strap. This arrangement may also be thought of as the resiliently biased mechanism permitting a decrease in a working length of the strap.

Optionally, the features discussed herein in relation to the first attachment element may equally apply to the second attachment element. For example, optionally the second attachment element may be movable relative to the strap to enable selective adjustment of a position of the second attachment element along the strap, in a similar manner to that discussed above in relation to the first attachment element. Advantageously, this may allow the user to provide single-sided adjustment from either the first and/or second side of the mobility device, thereby further improving convenience of use.

Optionally, the second attachment element may comprise a resiliently biased mechanism for selectively clamping the strap to prevent the second attachment element from sliding along the strap in a direction towards a distal end of the second strap portion. The second attachment element may include similar features to those discussed above in relation to the first attachment element. Of course, it will be noted that, since the first (protruding) strap portion is located at an opposite end of the lateral beam from the second (protruding) strap portion, the 'proximal' direction as seen from the first strap portion and first attachment element may be different from the `proximal' direction as seen from the second strap portion and second attachment element.

Optionally, the second attachment element may be different from the first attachment element. For example, the second attachment element may be fixed relative to the strap. This may allow the hoist to maintain advantageous single-sided adjustability (via the first attachment element) whilst also simplifying the overall design of the hoist. Further, by providing a second attachment element which remains fixed to the strap, this may help to further improve stability of the hoist.

Optionally, the first strap portion includes a deformable section which is configured to deform under a threshold load from a non-deformed configuration in which the deformable section is dimensioned not to move past the first attachment element to a deformed configuration in which the deformable section is dimensioned to at least partly move past the first attachment element. In an embodiment, the threshold load is applied to the first attachment element, e.g. by pulling on the first attachment element.

The deformable section may also be referred to as a "*stretchable section"*, or a "*thickened section".*

When in the non-deformed configuration, the deformable section may be thicker and may have a shorter length than when it is in the deformed configuration. The deformable section may therefore be deformed or stretched to a thinner and longer (deformed) configuration, effectively increasing in usable length under a threshold load. This arrangement may advantageously help to lengthen the strap to safely lower the mobility device toward the ground in the event that the first attachment element fails to remain secured to the strap or becomes inadvertently released from the strap (e.g. by a user).

The deformable section may be located at a distal (excess) zone of the first protruding strap portion, such that the attachment element is located between the deformable section and the lateral beam in use. For example, the deformable section may be located between the first attachment element and the distal end of the first strap portion.

In the event that the attachment element (e.g. resiliently biased mechanism thereof) fails under the heavy weight of the mobility device, or is accidentally released from the strap, the attachment element may remain fixed to the mobility device but may be unable to retain the strap in a fixed position. The strap will therefore be pulled under the weight of the mobility device (effectively loosening the strap), in turn dropping the mobility device toward the floor. In embodiments where the entire length of strap is dimensioned to move past the first attachment element (e.g. through an aperture of the first attachment element), the strap could be entirely detached from the first attachment element, potentially dropping the mobility device. Conversely, by providing a deformable section as discussed above, when the (non-deformed) deformable section is brought into contact with the first attachment element under the weight of the mobility device, the deformable section will not be able to move past the first attachment element. In the event that this results in a load on the deformable section that is less than the threshold load, the deformable section will effectively act as a backstop halting any further downward movement of the mobility device. Conversely, in the event that the load exceeds the threshold load, the deformable section will deform (e.g. thin and lengthen) to move past the attachment element, in turn increasing its length to help bring the mobility device closer to the ground (compared to e.g. a non-deformable strap of the same non-deformed length). For example, the deformable section may deform in use to break the fall of the mobility device in order to reduce a rate of falling of the mobility device and/or to prevent the mobility device from hitting the ground.

The deformable section may have any suitable configuration. For example, the deformable section may be irreversibly (e.g. plastically) deformable and/or reversibly (e.g. elastically) deformable. The deformable section may be formed of materials (e.g. plastically and/or elastically deformable materials) configured to deform to move past the first attachment element. Alternatively or in combination, the deformable section may be manufactured to include one or more weakened zones (e.g. stitches) which are destructible (e.g. by ripping) under the threshold load to deform the deformable section.

For example, in the non-deformed configuration, the deformable section may include a plurality of layers of the strap, each layer being folded against and adhered to an adjacent layer. The strap (and thus the layers) may comprise webbing material. The layers may be folded to overlie each other in a flattened z-formation (aka switchback formation or serpentine formation). The layers may be individually adhered together e.g. by stitching or by a suitable adhesive. Optionally, each layer may be adhered to an adjacent layer by a tear seam configured to tear under the threshold load, to thereby deform the deformable section and allow the layers to unravel from each other. In an embodiment, each layer may be directly attached to only immediately adjacent layers.

The configuration of the deformable section may be chosen to provide desired deformation characteristics at a given threshold load. For example, a material (e.g. thread material), pattern, and/or number of the tear seams may be chosen to impart a desired strength or weakness to the tear seams.

Optionally, at least one of the layers of strap may include a flap (e.g. free end) which is not adhered to another layer. The flap may be positioned at an innermost section (e.g. proximal region or end) of the deformable section at or near to the first attachment element. Accordingly, when the deformable section impinges upon the first attachment element, the flap will be under a large amount of pressure and, since it is not adhered (e.g. sewn) to an adjacent layer, may help to initiate a peeling / tearing apart of the adjacent layers. In other words, the flap may help to weaken the deformable section to ensure that the deformable section breaks at the desired threshold load.

The flap may be located at a fold between adjacent layers (i.e. may comprise two layers), or may be located at an end of a single (final) layer in the deformable section.

Optionally, the strap is movable through an aperture formed in the first attachment element, further wherein the aperture is dimensioned to permit only a single layer of strap to pass therethrough. Accordingly, the strap may be freely movable through the first attachment element until it reaches the deformable section, at which point the plurality of layers of strap will either act as a backstop for preventing further dropping of the mobility device (if the load is under the threshold load), or will unravel to pass through the first attachment element and help lower the mobility device towards the ground (if the load is above the threshold load).

Optionally, the first strap portion may include a handle at an outer (end) or distal section thereof. The handle may be conveniently gripped and pulled by a user to tighten the strap. Optionally, the handle may be integrally formed with the strap, e.g. it may comprise two layers of webbing folded and adhered to form a loop. Alternatively, the handle may comprise a separate structure attached to the webbing of the strap.

Optionally, the first strap portion may include a stopper configured to resist decoupling of the strap from the first attachment element. For example, the handle may be considered to form a stopper. Optionally, the handle may comprise stronger adhesion (e.g. stronger stitching) between the two layers of webbing forming the loop compared to the adhesion (e.g. stitching) between adjacent layers in the deformable section. This may help to ensure that the strap remains attached to the attachment element in the event that the attachment element fails or is inadvertently released, thereby acting as a backstop to reduce the risk of the hoist dropping the mobility device.

Optionally, the features discussed herein in relation to the first strap portion and/or first attachment element may equally apply to the second strap portion and/or second attachment element. For example, the second strap portion may also include a deformable section and/or handle which may have any of the same features discussed herein in relation to the first strap portion.

A second aspect of the invention provides a hoist for lifting a mobility device, the hoist comprising: a lateral beam for extending over the mobility device, the lateral beam being configured to attach to a lifting apparatus for carrying the hoist; first and second strap portions configured to protrude from first and second ends of the lateral beam respectively; and first and second attachment element respectively coupled to the first and second strap portions and configured to attach to the mobility device; wherein the first strap portion includes a deformable section which is configured to deform under a threshold load from a non-deformed configuration in which the deformable section is dimensioned not to move past the first attachment element and a deformed configuration in which the deformable section is dimensioned to at least partly move past the first attachment element.

This arrangement may provide similar advantages to those discussed above in relation to the deformable section, without necessarily requiring the hoist to include a unitary strap extending across the lateral beam. For example, the first and second strap portions of the second aspect may optionally comprise two distinct straps, respectively fixed to the first and second ends of the lateral beam.

The hoist of the second aspect may further include any or of the same optional features discussed herein in relation to the first aspect. For brevity, these are not repeated here. However, it will be appreciated that the hoist of the second aspect may include any such features discussed in relation to the first aspect, in any suitable combination as discussed above, optionally without requiring the unitary strap.

The present disclosure further provides a kit of parts comprising the hoist of the first or second aspect, and the lifting apparatus for carrying the hoist. For example, the lifting apparatus (e.g. automated lift) may be configured to mount into a vehicle, for carrying the hoist and mobility device into a vehicle.

Alternatively, the kit-of-parts may include the hoist of the first or second aspect and the mobility device, optionally further including the lifting apparatus. The mobility device may include (e.g. by retrofitting) suitable attachment elements for coupling to the first and second attachment elements of the hoist.

The present disclosure further provides a vehicle comprising the hoist of the first and/or second aspect, and the lifting apparatus for carrying the hoist. The vehicle may be a van, a car, a multi-person vehicle (MPV), a mini-van, a bus, or the like.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Fig. 1** shows a perspective view of a prior art system including a hoist and lifting apparatus for lifting a mobility device.
**Fig. 2** shows a perspective view of an embodiment hoist before attachment to a mobility device;
**Figs 3 to 5** show perspective views of the hoist of Fig. 2 during various stages of fitting and adjustment to the mobility device, as viewed from one side of the hoist;
**Figs 6 to 10** show perspective views of the hoist during the various stages of fitting and adjustment to the mobility device of Figs 3 to 5, as viewed from another side of the hoist;
**Fig. 11** shows a perspective view of a resiliently biased mechanism in the first attachment element of the hoist of Figs 6 to 10;
**Fig. 12** shows a perspective view of a casing for the resiliently biased mechanism of Fig. 11, to form the first attachment element of the hoist of Figs 2 to 10;
**Fig. 13** shows a perspective view of an embodiment hoist having a modified first strap portion which comprises a deformable section;
**Fig. 14** shows a perspective view of the first strap portion of Fig. 13;
**Figs 15 and 16** show upper and side views respectively of the first strap portion of Fig. 14 in a non-deformed configuration before use; and
**Fig. 17** shows a side view of the first strap portion of Figs 14 to 16, in a deformed configuration.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

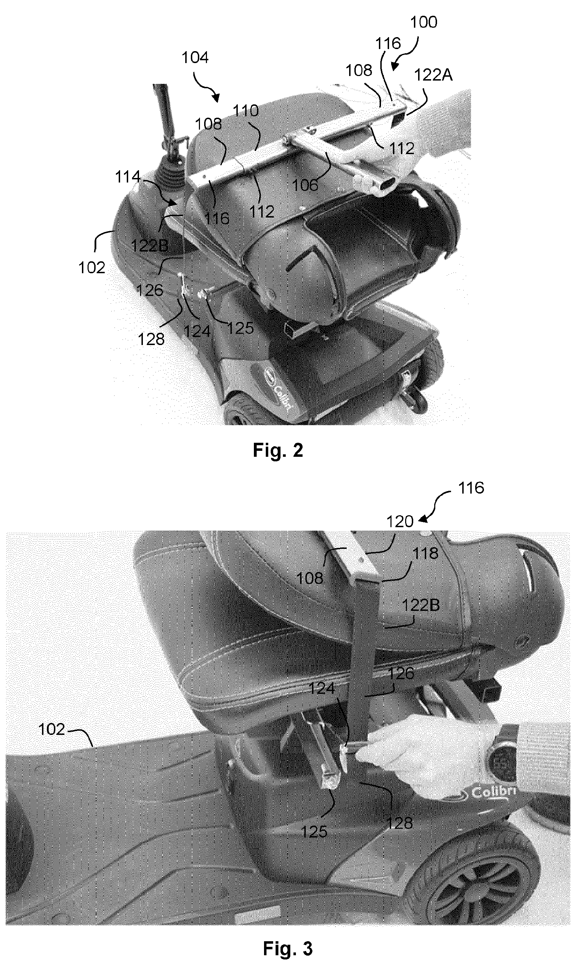

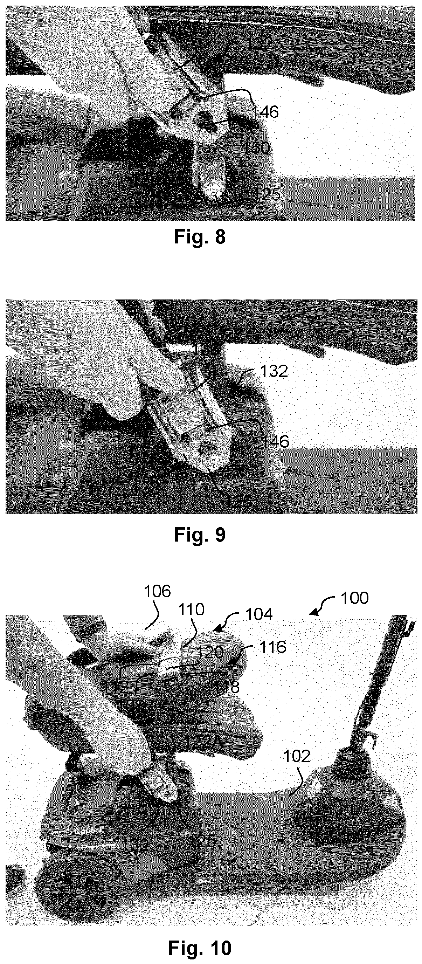

Figs 2 to 10 illustrate a first embodiment of a hoist 100 for lifting a mobility device 102.

The hoist 100 includes a lateral beam 104 for positioning over the mobility device 102.

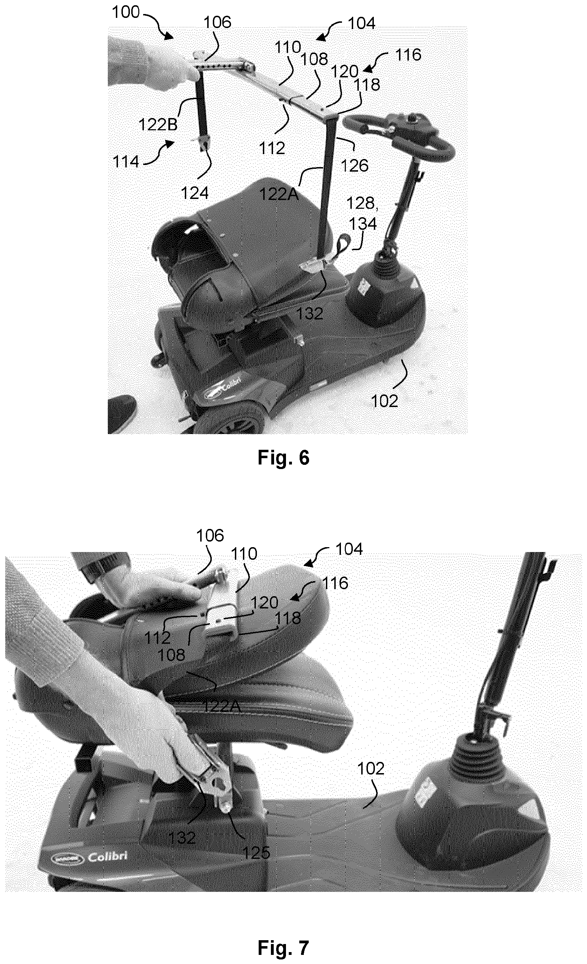

The lateral beam 104 includes (e.g. at or near its centre) a lift-attachment element 106 for attaching to a lifting apparatus (e.g. an automated lift) for carrying the hoist 100. The lift-attachment element 106 comprises an elongate member which is pivotally connected to an upper surface at the centre of the lateral beam 104. As is best shown in Fig. 6, the elongate member 106 may include a plurality of apertures along its side for attaching to the lifting apparatus, e.g. via screws. In variant embodiments, the lift-attachment element may comprise a different configuration, e.g. it may comprise a clip such as a carabiner for connecting to the lifting apparatus.

The lateral beam 104 extends laterally over at least a portion of the mobility device and may thereby help to laterally stabilise the hoist and mobility device during use. In this embodiment, the lateral beam 104 comprises three telescoping members, including two inner (peripheral) members 108 and an outer (central) member 110, each of which are slidable relative to each other to adjust the length of the lateral beam 104. By providing three telescoping members, the length of the lateral beam may be adjusted whilst also allowing the elongate member 106 (which is attached to the outer member 110) to remain substantially at the centre of the lateral beam 104, in turn helping to provide an even weight distribution across the hoist. In variant embodiments, the lateral beam may have other configurations, e.g. it may have a non-adjustable length, or it may have a different number of adjustable members (e.g. two telescoping members).

The lateral beam 104 further includes a pair of beam-locking elements 112 (one beam locking element 112 at or near each end of the outer member 110) for selectively fixing the length of the lateral beam. In this embodiment, each beam-locking element 112 comprises a set of (e.g. two) screws which extend through corresponding apertures in the outer member 110 to selectively bear against an inner member 108 (e.g. by using a screwdriver to vary the protrusion of the screws against the inner member 108). In variant embodiments, the beam-locking element 112 may have other configurations, e.g. may be configured as a clamp or snap-fit engagement feature to secure the beam members 108 and 110 together.

The hoist 100 further includes a strap 114 extending along the lateral beam 104 and movably coupled to the lateral beam 104. In this embodiment, the strap 114 is slidably coupled to the lateral beam 104 and extends through the lateral beam 104. In particular, the inner and outer members 108, 110 of the lateral beam 104 are hollow to accommodate the strap 114 extending therethrough. The lateral beam 100 further includes a pair of strap-locking elements 116 (one at each end of the lateral beam) for selectively fixing the strap 114 to the lateral beam 104.

By providing a pair of strap-locking elements and beam-locking elements, with one at each end of the lateral beam 104, the hoist can be easily adjusted relative to the lateral beam 104 from either side of the apparatus, without requiring the user to move around to the other side of the mobility device during adjustment to reach the locking elements. However, in variant embodiments, the lateral beam 100 may include only a single strap-locking element and/or only a single beam-locking element, e.g. at one side of the lateral beam 104.

Each strap-locking element 116 includes a respective clamping element 118 in the form of a hollow rectangular body (e.g. formed of plastic) which fits into and extends along a portion of the lateral beam 104. A section of the strap (not shown) within the lateral beam 104 extends through the hollow body of each clamping element 118. Each strap-locking element 116 further includes a screw 120 which extends through an aperture in the lateral beam 104 to selectively bear against the respective clamping element 118 (e.g. by using a screwdriver to vary a protrusion of the screw). Each clamping element 120 is able to flex such that the protrusion of the screw 118 against the clamping element 120 in turn causes the clamping element 120 (e.g. a planar surface thereof) to flex against the strap 114, thereby clamping it in place against an opposing surface (e.g. against an opposing planar surface of the hollow rectangular body). Each clamping element includes an enlarged end which bears against the end of the lateral beam to prevent the clamping element from disappearing inside the lateral beam. Another function of the enlarged end is that it protects the strap from the end of the lateral beam. That is, the strap contacts the enlarged end instead of the end of the lateral beam. This can be advantageous if the end of the lateral beam is sharp and could damage the strap.

In this embodiment, the strap 114 is a unitary length of webbing material having first and second (protruding) strap portions 122A and 122B configured to protrude from first and second ends of the lateral beam 104 respectively. The protruding first and second strap portions 122A and 122B are coupled to respective first and second attachment element (e.g. clips) 132 and 124 for attaching to complementary attachment elements on the mobility device.

Figs 1 to 5 show the second strap portion 122B in detail, and Figs 6 to 10 show the first strap portion 122A in detail.

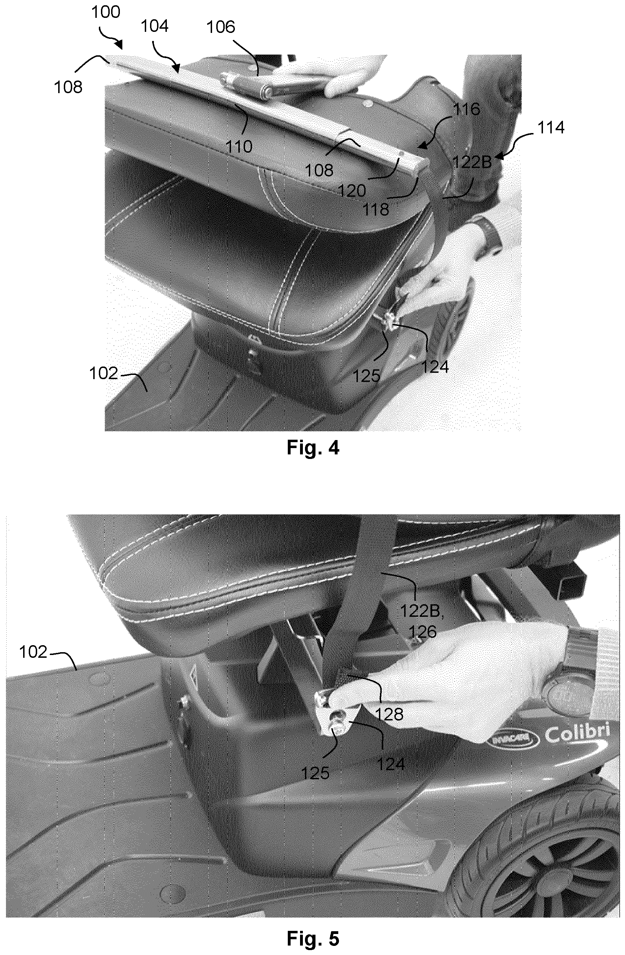

For example, as shown in Fig. 5, the second attachment element 124 on the strap portion 122B is formed as a clip having a first aperture dimensioned to receive the strap therethrough, and a second aperture (or slot) sized to receive a protrusion 125 of the mobility device 102. The second attachment element 124 is fixed relative to the strap (i.e. does not enable selective adjustment of the attachment element 124 along the strap 114).

The first side of the hoist 100 (best shown in Figs 6 to 10) is largely similar to the second side of the hoist 100 (best shown in Figs 2 to 5) and includes equivalent reference numerals to denote equivalent features. However, the first side differs from second side in that the first side includes a different type of attachment element 132 for securing to the mobility device 102, and includes a first strap portion 122A having a loop at its distal end (in the excess zone) to form a handle 134.

It will be appreciated that each protruding strap portion 122A-B may effectively be considered to define two zones relative to its respective attachment element 124 or 132: (i) a working zone 126 which is located at a proximal end of the strap portion 122A-B between the attachment element 124 or 132 and the lateral beam 104 (and which is load-bearing when lifting the mobility device), and (ii) an excess zone 128 which is located at the distal end of the strap portion 122A-B, at an opposite end of the attachment element 124 or 132 from the lateral beam 104 (and which is not load-bearing when lifting the mobility device).

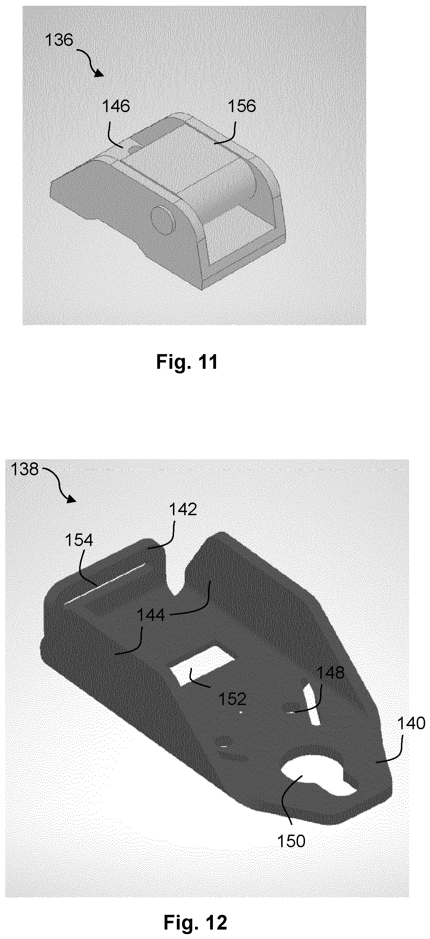

Figs 11 and 12 illustrate the first attachment element 132 in further detail. The first attachment element 132 comprises a resiliently biased mechanism 136 for selectively clamping the strap 114 to prevent the first attachment element 132 from sliding along the strap 114 in a direction towards a distal end of the first strap portion 122A. The resiliently biased mechanism 136 prevents movement of the first attachment element 132 towards the distal end of the first strap portion 122A, and permits movement of the first attachment element 132 towards the proximal end of the first strap prtion 122A. Thus, the strap fed through the resiliently biased mechanism 136 is locked against movement in one direction and free to move in the other direction. The resiliently biased mechanism is releasable (by overcoming the resilient force) to allow movement of the first attachment element 132 along the first strap portion 122A towards the proximal end (i.e. towards the lateral beam 104) so that the user can loosen the strap when desired. This arrangement allows the strap 114 to be easily tightened whilst also preventing loosening of the strap 114 except when specifically desired by the user.

The attachment element 132 further includes a casing 138 shaped to at least partially surround the resiliently biased mechanism 136, e.g. along four side faces of the resiliently biased mechanism 136. As shown in Fig 12, the casing includes an inner face (or "base") 140 for facing inwardly towards the mobility device 102 in use, an upper face 142 protruding from the inner face for facing upwardly towards the lifting apparatus in use, and a pair of side faces 144 protruding from the inner face for extending along opposing sides of the resiliently biased mechanism 136. In variant embodiments, the casing may have a different shape and/or its various faces may be directed in other directions.

The resiliently biased mechanism 136 includes one or more fixing structures 146 (e.g. apertures) for fixing to corresponding fixing structures 148 (e.g. apertures) formed on the base 140 of the casing 138 via a fixing element (e.g. a screw or nut and bolt). The casing 138 and resiliently biased mechanism 136 may each have a rigid and robust structure, e.g. formed e.g. of metal.

The inner face 140 of the casing 138 further includes a slot 150 for attaching to a corresponding protrusion of the mobility device 102, in a similar manner to that described in relation to the first embodiment.

The inner face 140 further includes a first strap cut-out 152 through which strap material may be conveyed from the working zone 126 of the first strap portion 122A. Likewise, the upper face 142 includes a second strap cut-out 154 through which strap material may be conveyed to the excess zone 128 of the strap portion 122A. The resiliently biased mechanism 136 includes a cam 156 around which strap material may be conveyed from the first strap cut-out 152 toward the second cut-out 154 when the resiliently biased mechanism 136 is secured to the casing 138.

The cam 156 is spring-loaded to enable the strap to be easily pulled in a direction away from the lateral beam 104 (i.e. to tighten the strap, by pulling material in a direction from the first cut-out 152 toward the second cut-out 154), but to prevent the strap 114 from being pulled in an opposite direction unless a user first releases the spring-retaining feature (e.g. by lifting the cam 156 against the spring and away from the casing 138).

The second strap cut-out 154 is sized to form a relatively snug fit to the strap 114, e.g. permitting only a single layer of strap to pass therethrough. However, as can be seen from Fig 6, the strap 114 includes a handle 134 at a distal end thereof, which is formed of a loop of strap and has a thickness greater than a single layer of strap. Accordingly, the handle 134 may also provide a dual function of acting as a backstop to resist the strap detaching from the attachment element 132 through the second strap cut-out 154.

As shown in Figs 2 and 5, in use, the mobility device 102 may be placed in a configuration with its backrest folded downward to lie against the squab of the seat. The hoist 100 may then be placed above the mobility device 102, with the lateral beam 104 extending laterally across the mobility device (e.g. against the folded-down backrest). In Figs. 2 to 10, various stages of fitting and adjustment are shown in which the hoist 100 is not yet connected to a lifting apparatus (and may thus be fitted to the lifting apparatus after connection to the mobility device 102). In variant methods, the hoist 100 may be secured to the lifting apparatus before attachment to the mobility device 102. Accordingly, the lifting apparatus may be used to carry the mobility device to a convenient location for final re-adjustments before use.

During adjustment of the hoist 100, the length of the lateral beam 104 may be adjusted to help improve the fit across the mobility device 102, by varying the relative positions of the inner and outer members 108 and 110. When an appropriate length is selected, the inner and outer members 108 and 110 may be secured to each other via the beam-locking elements 112.

During adjustment each strap-locking element 116 is initially in an unlocked position, so that the strap 114 is freely movable relative to the beam 104. Each attachment element 124 and 132 may then be brought in contact with and secured to the mobility device 102. Optionally, the backrest of the mobility device 102 may be compressed against the squab to help minimise the height of the device during adjustment. The pivotal elongate member 106 may be useful at this stage to help apply pressure along the backrest to compress the mobility device 102. The first protruding strap portion 122A may then be moved (pulled) relative to the first attachment element 132 to tighten and secure the hoist 100 against the mobility device 102.

Due to the unitary structure of the strap 104, the hoist 100 may be adjusted (e.g. tightened or loosened) from a single side only, without requiring both protruding strap portions 122A-B to be individually adjusted. Once the hoist is appropriately secured onto the mobility device 102, it may then be used to lift the mobility device (e.g. into a vehicle) by using a lifting apparatus (e.g. automated lift).

It will be appreciated that, in variant embodiments, the second attachment element may also be adjustable relative to the strap, e.g. the second attachment element may have a similar or identical structure to the first attachment element 124, for attaching the second strap portion 122B to the mobility device 102.

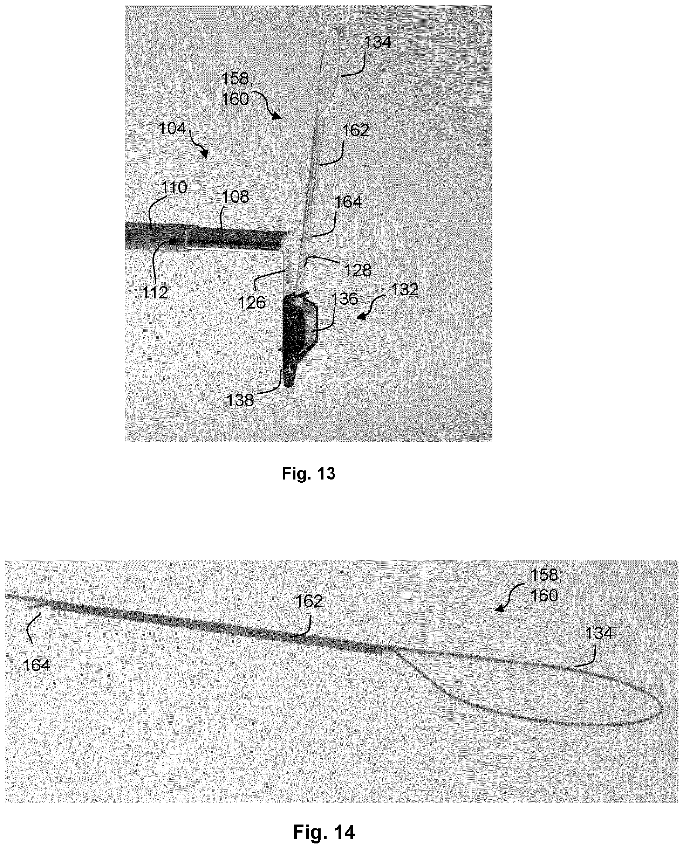

Figs 13 to 17 show a portion of a modified strap 158 according to an embodiment of the invention. Only a first strap portion 160 of the strap 158 is shown, but it will be appreciated that a second strap portion on an opposite side of the lateral beam 104 from the first strap portion may also have the same configuration. Further, the first and second strap portions may be interconnected as a unitary strap extending through the lateral beam as in the previous embodiments, or may be separate individual strap portions fixed to each end of the lateral beam 104.

The first strap portion 160 includes a deformable section 162 in its excess zone (i.e. at a distal or outer end), to assist in safely lowering the mobility device to the ground in the event that the attachment element (e.g. attachment element 132) fails or is inadvertently released during use and thereby accidentally allows the strap to loosen (moving toward the lateral beam).

Although Fig. 13 illustrates the excess zone of the strap pointing vertically upward, in use, the excess zone may hang freely downward. Alternatively, in some embodiments, the handle may be connected to another element, e.g. to the lifting apparatus, to extend upward in use and prevent any tangling.

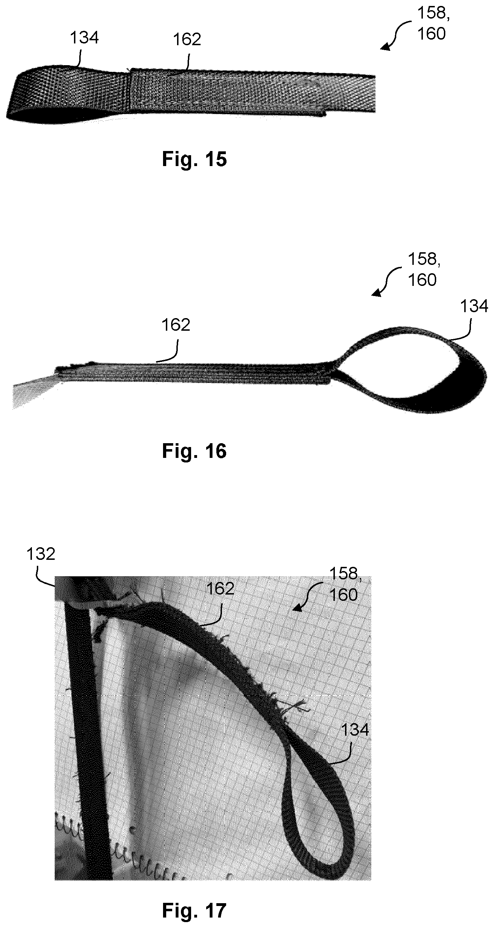

The deformable section 162 is configured to deform under a threshold load from a non-deformed configuration (shown in Figs 13 to 16) in which the deformable section 162 is dimensioned not to move past the attachment element 132 to a deformed configuration (shown in Fig 17) in which the deformable section 162 is dimensioned to at least partly move past the attachment element 132. In particular, the deformable section 162 includes a plurality of layers of strap material (e.g. webbing), each layer being folded against an adjacent layer in a Z-formation. The layers are individually adhered to each other, e.g. via tear seams which are configured to break under a threshold load (which is less than a typical weight of a mobility device).

One of the layers includes a flap 164 which is not adhered to, and is freely movable relative to, the other layers. The flap 164 is positioned at an end of the deformable section 162 that is most proximal to the attachment element 132.

In use, in the event that the attachment element 132 fails or is inadvertently released from the strap 158, the weight of the mobility device 102 will pull the attachment element 132 downwards, in turn unravelling the strap 158. The deformable section 162 (which is in an initial non-deformed configuration) will then be pulled into contact with the attachment element 132 and, since it is too large to fit through the cut-out 154, will begin to deform (rip) layer-by-layer, in turn moving through the attachment element 132 and into the working zone 126 of the strap 158. In this manner, the deformable section 162 may help to safely decelerate the mobility device 102 to a stop without exceeding a force limit on the load bearing components.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.
- 10: Prior art system

- 12: Hoist

- 16: lateral beam
- 14: Powered lift

### System

Lifting apparatus
- 100: Hoist

- 104: Lateral beam

- 106: Lift-attachment element
- 108: Inner member(s)
- 110: Outer member
- 112: Beam-locking element(s)
- 116: Strap-locking element(s)

- 118: clamping element(s)
- 120: screw(s)

- 114, 158: Strap

- 122A, 160: First strap portion

- 126: working zone
- 128: excess zone

- 134: handle
- 162: deformable section

- 164: flap
- 122B: second strap portion

- 124: Second attachment element
- 132: First attachment element

- 136: Resiliently biased mechanism

- 146: Fixing structure(s)
- 156: Cam

- 138: Casing

- 140: Inner face (base)

- 148: fixing structure(s)
- 150: slot
- 152: first strap cut-out

- 142: Upper face

- 154: second strap cut-out

- 144: Side faces

- 102: Mobility device

- 125: attachment element

## Claims

1. A hoist for lifting a mobility device, the hoist comprising:
a lateral beam for extending over the mobility device, the lateral beam being configured to attach to a lifting apparatus for carrying the hoist;
a strap extending along the lateral beam and movably coupled to the lateral beam, the strap having first and second strap portions configured to protrude from first and second ends of the lateral beam respectively; and
first and second attachment elements respectively coupled to the first and second strap portions and configured to attach to the mobility device;
wherein the first attachment element is moveable relative to the strap to enable selective adjustment of a position of the first attachment element along the strap.

2. The hoist of claim 1, wherein the strap extends through the lateral beam.

3. The hoist of claim 1 or 2, further comprising a strap-locking element for selectively fixing the strap to the lateral beam.

4. The hoist of any preceding claim, wherein the lateral beam has an adjustable length.

5. The hoist of claim 4, wherein the lateral beam comprises two or more telescoping members, the telescoping members being slidable relative to each other to adjust the length of the lateral beam.

6. The hoist of claim 4 or 5, wherein the lateral beam includes a beam-locking element for selectively fixing the length of the lateral beam.

7. The hoist of any preceding claim, wherein the first attachment element comprises a resiliently biased mechanism for selectively clamping the strap to prevent the first attachment element from sliding along the strap in a direction towards a distal end of the first strap portion.

8. The hoist of any preceding claim, wherein the second attachment element is movable relative to the strap to enable selective adjustment of a position of the second attachment element along the strap.

9. The hoist of any preceding claim, wherein the first strap portion includes a deformable section which is configured to deform under a threshold load from a non-deformed configuration in which the deformable section is dimensioned not to move past the first attachment element to a deformed configuration in which the deformable section is dimensioned to at least partly move past the first attachment element.

10. The hoist of claim 9, wherein, in the non-deformed configuration, the deformable section includes a plurality of layers of the strap, each layer being folded against and adhered to an adjacent layer.

11. The hoist of claim 10, wherein at least one of the layers includes a flap which is not adhered to another layer, the flap being positioned at an innermost section of the deformable section at or near to the first attachment element.

12. The hoist of any preceding claim, wherein the strap is movable through an aperture formed in the first attachment element, further wherein the aperture is dimensioned to permit only a single layer of strap to pass therethrough.

13. The hoist of any preceding claim, wherein the first strap portion includes a handle at a distal section thereof.

14. A hoist for lifting a mobility device, the hoist comprising:
a lateral beam for extending over the mobility device, the lateral beam being configured to attach to a lifting apparatus for carrying the hoist;
first and second strap portions configured to protrude from first and second ends of the lateral beam respectively; and
first and second attachment element respectively coupled to the first and second strap portions and configured to attach to the mobility device;
wherein the first strap portion includes a deformable section which is configured to deform under a threshold load from a non-deformed configuration in which the deformable section is dimensioned not to move past the first attachment element and a deformed configuration in which the deformable section is dimensioned to at least partly move past the first attachment element.

15. A kit of parts comprising:
the hoist of any preceding claim; and
the lifting apparatus for carrying the hoist.

16. A vehicle comprising:
the hoist of any one of claims 1 to 14; and
the lifting apparatus for carrying the hoist.
